# EUROPEAN PATENT APPLICATION

(11) **EP 3 561 664 A1**
(43) Date of publication of application: **30.10.2019**
(21) Application number: 19171476.5
(22) Date of filing: 27.04.2019
(51) Int. Cl.: G06F 8/30, G06Q 10/06

(54) **GRAPH-BASED DATA ANALYSIS BASED ON INTERPRETING A STRUCTURE DEFINITION LANGUAGE**

(30) Priority: 27.04.2018 US 201862664061 P; 26.04.2019 US 201916396594
(71) Applicant: Risk Management Solutions, Inc., Newark, CA 94560 (US)
(72) Inventor: Glaubman, David, Newark, CA 94560 (US); Stumpo, Cody, Newark, CA 94560 (US); Stephan, Philippe, Newark, CA 94560 (US)
(74) Representative: Harden, Henry Simon

(57) **Abstract**

A method for graph-based data analysis based on interpreting a structure definition language comprises storing a plurality of structures, wherein the plurality of structures define a plurality of positions and a plurality of relationships between the plurality of positions; generating one or more compiled structures based on the plurality of structures; receiving, from a client computing device, a query specifying one or more input positions; in response to receiving the query: selecting, based on the one or more input positions, one or more particular compiled structures of the one or more compiled structures; determining a result set for the query based on executing the one or more particular compiled structures, wherein executing the one or more particular compiled structures causes evaluating at least the one or more input positions; and causing the result set to be provided to the client computing device.

## Description

### FIELD OF THE DISCLOSURE

The present disclosure relates generally to computer-implemented data storage and analysis. One technical field of the disclosure is computer-implemented techniques for performing data storage and analysis based on automatic interpretation of instructions that are expressed in a domain-specific symbolic programming language.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Data analysts and other computer users often interact with and request data from computer-based databases containing large collections of data objects. In many instances, the data objects stored in such databases include information from disparate sources and may represent a variety of real-world information. In order to analyze large and varied collections of data objects, analysts often attempt to find patterns of interest based on relationships exhibited between the data objects. For example, given a database containing a large number of interrelated data objects representing individuals, merchants, financial institutions, and payment transactions, an analyst may attempt to find all instances of data objects corresponding to a particular set of individuals making payments to merchants using a particular bank account. The corresponding database objects may include the particular set of individuals, the financial institutions receiving or sending the payments, the merchants receiving the payments, and the payment transactions. Such a search may require searching each type of data object and analyzing relationships between the different types of data objects. For a large data set, the search requires significant time and computational resources.

In the insurance domain, an insurance company may manage thousands of portfolios, each containing thousands of contracts. In addition, the contracts may be subject to reinsurance agreements, treaties, and other factors that affect not only the contracts themselves but also other contracts. Analyzing insurance data may require determining relationships between thousands of primary contracts, portfolios, re-insurance contracts, and such.

In order to analyze a set of insurance data objects, related objects may have to be identified and evaluated. For example, to analyze the effect of a risk event on a portfolio, each contract in the portfolio must be evaluated against not only the risk event, but also against related reinsurance agreements, treaties, contracts, and other factors. Each of the related objects must also be identified and evaluated, any objects related to those must also be identified and evaluated, and so on. Furthermore, for typical risk analysis systems, the evaluation of different objects may need to be performed by separate applications or systems. In other words, a single application or system may not be able to analyze different objects, much less analyze different objects based on relationships between the objects. Furthermore, changes to a data object may need to be propagated to other related objects. For example, changes to a contract may also need to be reflected in related agreements, treaties, and other contracts to prevent errors when analyzing the contract and/or the related objects.

Thus, a mechanism is desired for data analysts and other users to easily express relationships between different data objects and to seamlessly perform queries that target different objects.

### SUMMARY OF THE INVENTION

The appended claims may serve as a summary of the invention. Broadly stated, the present method recites a method according to claim 1.

The present system also recites a computing system according to claim 11, a computing device according to claim 12 and a computer program claim according to claim 13.

### BRIEF DESCRIPTION OF THE DRAWINGS

In the drawings:
FIG. 1 illustrates an example computer system in which the techniques described may be practiced, according to one implementation.
FIG. 2 illustrates example steps for generating a search result set using structures, according to an implementation.
FIG. 3, FIG. 4, FIG. 5, FIG. 6, and FIG. 7 depict example graphical user interfaces that may be generated by a structure management application for display using computer display devices, according to an implementation.
FIG. 8 is a block diagram that illustrates a computer system upon which an implementation of the invention may be implemented

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

The text of this disclosure, in combination with the drawing figures, is intended to state in prose the algorithms that are necessary to program a computer to implement the claimed inventions, at the same level of detail that is used by people of skill in the arts to which this disclosure pertains to communicate with one another concerning functions to be programmed, inputs, transformations, outputs, and other aspects of programming. That is, the level of detail set forth in this disclosure is the same level of detail that persons of skill in the art normally use to communicate with one another to express algorithms to be programmed or the structure and function of programs to implement the inventions claimed herein.

In an implementation, the computer system is programmed or configured to provide a visual interface for viewing, editing, and executing structures. Various aspects of the structure definition programming language and the visual interface are described in separate sections herein. Implementations are described in sections below according to the following outline:
1.0 GENERAL OVERVIEW
2.0 SYSTEM OVERVIEW
3.0 STRUCTURES
   3.1 POSITION STATEMENTS
   3.2 INITIALIZATION STATEMENTS
   3.3 CONTRACTS
   3.4 PORTFOLIOS
4.0 STRUCTURE EXECUTION
5.0 PROCESS OVERVIEW
6.0 EXAMPLES
7.0 IMPLEMENTATION EXAMPLE - HARDWARE OVERVIEW

### 1.0 GENERAL OVERVIEW

Generally, implementations provide computer-implemented methods and digital computer systems for providing an analytics platform for managing and executing structures. As referred to herein, a "structure" is a computer program that models a flow of quantities. In an insurance context, for example, a structure models the flow of quantities, such as risks, losses, premiums, and expenses, through risk transfer instruments, such as insurance contracts, reinsurance contracts, and alternative risk transfer instruments. The structure may indicate relationships between the risk transfer instruments, quantities, entities, and other attributes or values. The structure may also indicate how to evaluate, divide, aggregate, or otherwise transform various quantities.

In an implementation, a structure is written using a structure definition programming language. In an implementation, the structure definition programming language is a special-purpose programming language for the insurance industry. The structure definition programming language may incorporate or reference a contract definition language used to define insurance contracts. In other implementations, the structure definition programming language may be configured for use in other types of financial analysis.

The computer system may be programmed or configured to interpret structures written using the structure definition programming language, compile the structures to generate compiled structures, and generate result sets for queries by executing the compiled structures.

### 2.0 SYSTEM OVERVIEW

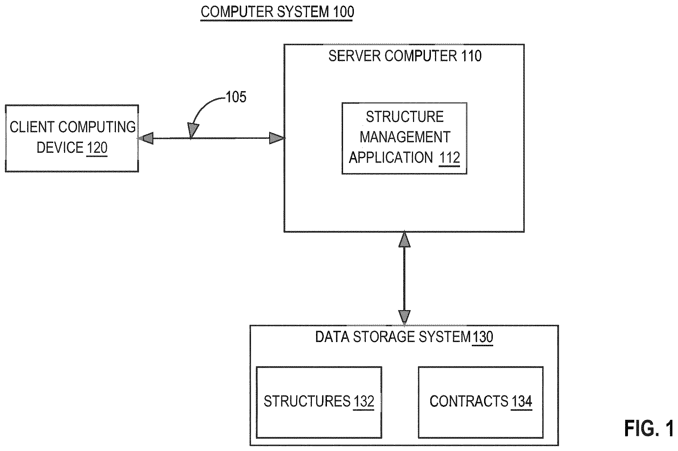

FIG. 1 illustrates an example computer system in which the techniques described may be practiced, according to one implementation.

In an implementation, a computer system 100 comprises components that are implemented at least partially by hardware at one or more computing devices, such as one or more hardware processors executing stored program instructions stored in one or more memories for performing the functions that are described herein. In other words, all functions described herein are intended to indicate operations that are performed using programming in a special-purpose computer or general-purpose computer, in various implementations. FIG. 1 illustrates only one of many possible arrangements of components configured to execute the programming described herein. Other arrangements may include fewer or different components, and the division of work between the components may vary depending on the arrangement.

Computer system 100 comprises server computer 110, data storage system 130, and client computing device 120. Server computer 110, data storage system 130, and client computing device 120 may be interconnected to one another using any suitable data communication mechanism such as one or more data networks represented by line 105. The one or more data networks may include one or more local area networks (LANs), one or more wide area networks (WANs), one or more internetworks such as the public Internet, or a company network. Server computer 110, also referred to as a computing device, may host or execute structure management application 112, and may include other applications, software, and other executable instructions to facilitate various aspects of implementations described herein. Additionally, server computer 110 may execute one or more compiled structures 114 to generate a result set in response to receiving an analytics question and/or search query.

Client computing device 120 may be any computing device, including but not limited to: servers, racks, work stations, personal computers, general purpose computers, laptops, Internet appliances, wireless devices, wired devices, multi-processor systems, mini-computers, and the like.

Client computing device 120 may execute a command line interface, a graphic user interface, a REST endpoint, events sent through a messaging system, or any combination of transmission and encoding technologies to interact with the server computer 110. The graphic user interface may be displayed in a browser executing on client computing device 120. The interface and/or endpoint may be configured or programmed to provide a search query to the server computer 110 and receive a set of search results generated by server computer 110. In an implementation, the set of search results may be stored in a data file provided to the client computing device 120 or in a data file accessible by the client computing device 120. Example data files include JSON, comma separated values, SQL dump, and other file types. Additionally or alternatively, the set of search results may be displayed at client computing device 120 using, for example, the command line interface or the graphical user interface.

In one implementation, data storage system 130 is a data storage subsystem consisting of programs and data that is stored on any suitable storage device such as one or more hard disk drives, memories, or any other electronic digital data recording device configured to store data. Although data storage system 130 is depicted as a single device in FIG. 1, data storage system 130 may span multiple devices located in one or more physical locations. For example, data storage system 130 may include one or nodes located at one or more data warehouses. Additionally, in one implementation, data storage system 130 may be located on the same device or devices as server computer 110. Alternatively, data storage system 130 may be located on a separate device or devices from server computer 110.

Data storage system 130 stores data used by server computer 110 to process queries. In the illustrated example, data storage system 130 stores structures 132 and contracts 134. As discussed in further detail below, a structure is a set of program instructions that model a flow of numeric information, e.g. quantities of interest. A structure may define particular quantities and/or relationships between particular quantities. In an implementation, a quantity may be defined based on one or more contracts, e.g. contracts 134. A contract comprises a set of program instructions that model coverage, terms, and conditions for determining payout following loss events under an agreement. Additionally, data storage system 130 may store user configurations for compiling and executing structures, compiled structures, and other related data and files.

Server computer 110 may be any computing device, including but not limited to: servers, racks, work stations, personal computers, general purpose computers, laptops, Internet appliances, wireless devices, wired devices, multi-processor systems, mini-computers, and the like. Although FIG. 1 shows a single element, the server computer 110 broadly represents one or multiple server computers, such as a server cluster, and the server computer may be located in one or more physical locations. Server computer 110 also may represent one or more virtual computing instances that execute using one or more computers in a datacenter such as a virtual server farm.

In an implementation, the structure management application 112 provides an API that may be accessed, for example, by a web browser or client application running on client computing device 120. The API may expose the structures 132 as resources that may be viewed, modified, or queried over the network by the browser or client application. Additionally, the API may allow a structure to be created and stored to data storage system 130.

For example, a graphical user interface may be displayed on a display device of client computing device 120. The graphical user interface may be used to display a list of structures, allow a user to provide input for searching or filtering the list of structures for particular structures (e.g. by structure name, position name, contract name, etc.), allow the user to select particular structures for display, and display a text or graphical view of selected structures. A text view of a structure may include displaying the underlying program instructions, e.g. code or statements, of the structure. A graphical view of a structure may comprise a graph, wherein the nodes of the graph correspond to quantities defined in the structure and the edges of the graph correspond to relationships between the quantities as defined in the structure. Additionally, the graphical user interface may include a text editor that allows a user to define a new structure and/or modify an existing structure.

Additionally or alternatively, structure management application 112 comprises program instructions that are programmed or configured to perform a variety of functions needed for managing and executing structures including, but not limited to: retrieving structures 132 from data storage system 130, processing structures to identify relationships between structures, processing structures to generate graphical representations, compiling structures, processing queries to generate result sets, retrieving contracts 134, and any other aspects of implementations described herein.

### 3.0 STRUCTURES

A "structure" is a set of program instructions that model one or more flows of numeric information. The structure may define one or more quantities and relationships between the one or more quantities and other internal or external quantities. Additionally, quantities may be defined based on, for example, one or more values of other quantities defined within the structure, one or more values of other quantities defined in other structures, values generated by executing one or more program instructions, values generated by evaluating one or more contracts, and/or values received from one or more external data sources.

In an implementation, system 100 is configured to analyze insurance data. In an insurance context, a structure may model the flow of quantities such as risks, losses, premiums, expenses, additive statistics, money, counts, loss tables, etc., as they pass through contracts and other transformations. Structures may correspond to particular portfolios, sub-portfolios, insurance policies, contracts, etc. and positions may reference other portfolios, sub-portfolios, policies, etc.

In an implementation, a structure comprises a list of statements expressing relationships among a plurality of positions. The list of statements may be ordered or unordered. In an implementation, the statements are written using a declarative language, and the statements do not need to be in any particular order.

A statement may correspond to a particular position. The statement, also referred to as a position statement, defines relationships among one or more positions, i.e. indicates how to evaluate the particular position with respect to one or more existing positions. As discussed in further detail below, a "position" refers to a particular quantity of interest, e.g., gross losses, net ceded premium, ground up loss, etc. in an insurance context. The position statement indicates how to evaluate the particular quantity of interest with respect to other quantities.

In an implementation, position statements are written using a structure definition language. A structure definition language is a special-purpose (domain-specific) programming language for the insurance industry. The structure definition language may include language and syntax designed to express quantities and relationships found in an insurance context. For example, the structure definition language may include functions, expressions, or operators specifically for processing insurance data or performing insurance-related calculations, such as applying a contract to a particular quantity or retrieving values from an event loss table.

In an implementation, the structure definition programming language is a declarative language. The structure definition programming language provides a way to represent the flow of numeric information in a declarative manner. Algebraic relationships between evaluatable positions are able to be represented, and each position is further associated with a computable object. Example program instructions for a structure may be:
Structure A
Net is Gross - Ceded

In this example, Structure A comprises a single position statement, "Net is Gross - Ceded." The position statement defines a first position, "Net." The position statement indicates that the "Net" position is formed by taking a second position, "Gross," subtracting (or calculating the 'net of) a third position, "Ceded."

As another example, assume a firm buys and sells insurance. As discussed above, the Net position of the firm may be the difference between the Gross and Ceded positions. The Gross position of the firm is the sum of direct business (where the firm insures a holder's direct liability) with the assumed business (where the firm assumes some of the liabilities that another has taken on). Example program instructions for a structure for modeling Net and Gross positions of the firm may be:
Structure B
Net is Gross - Ceded
Gross is Direct + Assumed

In the above example, a Structure B includes two position statements. A first position statement indicates that the "Net" position is formed by taking the "Gross" position and subtracting the "Ceded" position. A second position statement indicates that the "Gross" position is formed by taking the "Direct" position and adding the "Assumed" position. Executing the first position statement to generate a value for "Net" would require executing the second position statement to generate a value for "Gross" and using the value for "Gross" in generating the value for "Net." Although not illustrated in the above example, "Ceded," "Direct" and "Assumed" positions may also be defined in Structure B or may be defined in a separate structure.

In the implementation illustrated by the examples, the name of a new position is indicated on the left side of the position statement, and references to other positions appear on the right side of the position statement. The structure definition programming language syntax may require that external references appear only on the right side of the position statement. In other implementations, the structure definition programming language may be configured with different syntax and syntax rules.

Structures may provide modularity to a set of Positions and Contracts. That is, a well-designed structure has high cohesiveness (meaningful relations between the positions and contracts referenced within a particular structure), and low coupling with other structures (changes to other structures do not require changes to the particular structure).

To allow modularity, structures may reference elements that are defined in other structures. In an implementation, each structure is associated with a unique name and references to other structures may be formed using the unique name(s) of referenced structure(s). For example, assume an external reference is of the format, "structure-name!position-name" or "structure-name!contract-name." An example position statement for a Net position of an example structure may be:
Net is Commercial!Net + Residential!Net

In the above example, the position statement indicates that the Net position is formed by taking the Net position defined in the Commercial structure, and adding it to the Net position defined in the Residential structure. The Commercial structure and the Residential structure may each be defined separately from the current structure.

The separate definitions allow a single structure to be modified or created at a time, as part of a larger structure. The respective portion defined in a structure may be modified without affecting any other structures. Furthermore, the modular nature of structures facilitates ease of use, understanding by users, and efficient parallel computation of large compositions of structures by computers. For example, a corporate roll up may comprise tens of thousands of positions and treaty contracts, and millions of primary policies. Each structure may define a portion (e.g. five to fifty) of the positions, treaty contracts, and primary policies. Positions or contracts referenced by these structures may be further defined in additional structures. Thus, the structures are logically organized into a hierarchical format that is easily understood by users, and users can easily follow links between structures to find where objects are defined.

Structures may be created, updated, deleted, viewed, queried, and otherwise managed by users. As discussed in further detail below, a user interface may be provided for creating, updating, retrieving and/or querying structures. Additionally, the user interface may provide a visualization of a selected structure.

Each structure is stored in association with the structure name. As discussed above, each structure may be associated with a unique structure name. This allows other structures to unambiguously reference particular structures using their structure names. In an implementation, the structure name is not indicated in the text of the structure itself. The structure name may be inferred from a file name or from metadata stored with the structure. Additionally, each structure may be stored with or include additional metadata, such as structure description, organizational information, and other details. The additional metadata may be used for querying or filtering a list of structures.

In some implementations, each structure may be stored in separate files or otherwise stored such that multiple structures may be modified concurrently. This enables multiple users to work on different structures at the same time. The modularity of structures provides the benefit of allowing structures to be modified separately without affecting any structures that reference them. Referring to the above example, Net position in the Commercial structure may be defined, modified, and re-defined separately from the Net position in the example structure and from the Net position in the Residential structure. Changes to the Net position in the Commercial structure does not affect the Net position definitions in the other structures.

In an implementation, the program instructions of a structure may be divided into three portions: position statements, initialization hints, and contracts. The portions may appear in the order listed above, or may appear in different orders. A part may be empty (i.e. not included in the structure), and statements within each part may appear in any order without affecting the semantics of the structure.

In other implementations, the structure may comprise more or fewer parts. For example, rather than including initialization hints in the structure, initialization hints may be applied externally at evaluation time. As another example, contracts may be defined separately rather than inline in the structure text. For example, contracts may be defined as an additional array of contract objects.

For the purpose of illustrating a clear example, implementations are described herein using a structure definition language with particular syntax, operators, and functions. However, the syntax, operators, functions and other features may differ depending on the implementation. Additionally, other programming languages may be used, depending on the implementation.

### 2.1 POSITION STATEMENTS

A "position" is a uniquely named construct representing a quantity of interest. In an insurance context, the quantity represented by a position may be, for example, gross losses, net ceded premium, ground up loss, etc. A position statement specifies how to form or evaluate a new position in terms of one or more existing positions, or in terms of other data values or functions. As discussed in further detail below, position statements can refer to positions defined in other structures, which allows creation of arbitrarily complex directed acyclic graphs of position statements.

A position statement may specify that a position is evaluated based on applying one or more functions to one or more existing positions. Example functions used by position statements include grouping (addition), netting (subtraction), scaling (multiplication or division), filtering, applying contracts, etc. Other functions may also be defined in the structure definition language and used in position statements. In some implementations, user defined functions may also be used. A set of program instructions may be received and stored in association with a function name or operator. The function or operation may be referenced by a position statement. The set of program instructions may be retrieved, compiled, and/or executed as part of compiling and/or executing the structure.

The following code snippets illustrate example position statements, according to an implementation. In the examples below, a double slash ("//") is used to denote a comment explaining the corresponding line of code.

```
A is B + C + D // grouping or addition
          Net is Gross - Ceded // netting or subtraction
          Loaded is Gross * 1.10 // scaling to 110%
          Commercial is Gross / {LineOfBusiness is 'COM'} // filtering
          Treaty is Contract on Gross // Applying a contract
```

In the above examples, the first portion of the position statements specify the particular position being defined, e.g. "A," "Net," "Loaded," Commercial," and "Treaty". "is" is an operator used to denote how to evaluate the particular position, similar to an equal sign ("=") is used in some programming languages. Grouping or adding two or more positions is indicated by a "+" operator. Netting or subtracting two or more positions is indicated by a "-" operator. Scaling a position is indicated by a "*" operator and a value with which to scale. Applying a contract is indicated by specifying a contract ("Contract"), an "on" operator, and a position to which the contract should be applied ("Gross").

In an implementation, the structure definition programming language includes four types of position statements: group, scale, filter, and choice. A group position is formed by combining its input positions using grouping and/or netting operators. Example group position statements may be:
Net is Gross - Ceded
Corp is Res + Comm - PerRisk

In the first example statement, the position "Net" is formed by subtracting the position "Ceded" from the position "Gross." In the second example, the position "Corp" is formed by adding the position "Comm" to the position "Res," and subtracting the position "PerRisk." As discussed above, each position may be defined elsewhere in the same structure, or defined in one or more external structures.

A scale position is formed by scaling an input position by a constant factor. An example scale position statement may be:
Treaty 1Placed is Treaty1 * 0.15

In the above example, the position "Treaty1Placed" is formed by multiplying the position "Treaty1" by a factor of 0.15.

A filter position consists of the portions of the input position for which one or more predicates are true. An example filter position may be:
PortA.Commercial is PortA / {LOB is Commercial}

In the above example, the position "PortA.Commercial" consists of the portions of the position "PortA" whose value "LOB" (line of business) is equal to "Commercial." In an implementation, the value of a position may be an array comprising one or more facts (e.g. losses) and coordinates. For example, an element of an array may be: Loss(100000), Event(103), Peril(Wind), LossDate(June 13, 2019), LineOfBusiness(Commercial). This may represent the aggregate (sum) of all the portfolio losses occurring on June 23, 2019 due to damage caused by Wind from event 103, from contracts whose Line of Business is Commercial.

A choice position is formed by choosing an input position based on a tag value. In an implementation, the tag value may be determined from a risk analysis profile (RAP) setting. The RAP comprises settings which are used during analysis. For example, the RAP may specify which models to run, what event rates to use, etc. These settings may be grouped and each group saved under a respective name, which can subsequently be used for retrieval and usage. Additionally or alternatively, users may specify settings or overrides to settings (e.g., currency exchange rates) of the tag to be used by a choice position.

An example choice position statement may be:

```
Assumed is
              F? <- Finalized
              W? <- Written
                 <- Expected
```

In an implementation, a "<-" operator is used to indicate tag value options. A particular position or value is selected as the value of the position being defined based on whether the corresponding tag is used. In the above example, the position "Assumed" consists of the "Finalized" position if the "F?" tag is present, or the "Written" position if the "W?" tag is present. If neither tag is present, then the "Assumed" position will consist of the "Expected" position. The tag value is provided to the structure at runtime before the structure is executed. Choice positions provide a simple yet powerful way to express and execute what-if scenarios.

In an implementation, each position is associated with a unique name. The name may be a single word, or a set of words. The set of words may be delimited or notated in various ways, depending on the implementation, for example using parenthesis, brackets, braces. If a word, the structure definition language syntax may dictate that the name must start with a letter. The letter may be followed by any combination of letters, numbers, periods, colons, hyphens and/or question marks. The set of words may be expressed as a single string that is punctuated by periods, hyphens, underscores, etc. Position names may be arbitrarily long, although readability and general usability suggests that they should be kept as short as possible.

Additionally, a phrase may contain any characters except comment delimiters or name delimiters such as braces. The delimiters may not be considered part of the actual position name.

Additionally, namespaces may be used to maintain uniqueness of position names, and to organize sets of positions. For example, namespaces may be used to indicate an entity to which a position belongs.

In an implementation, every position name has an associated namespace, determined as follows:
- If the name contains a colon character, the namespace is that part of the name before the first colon. As an example, the position name: {ACME USA:Treaty} has the namespace "ACME USA".
- If the name does not contain a colon character, then the position belongs to the default namespace for that structure.

### 2.2 INITIALIZATION STATEMENTS

In an implementation, a structure may contain initialization statements for 'leaf' positions. Leaf positions are positions that are not defined elsewhere and/or do not reference other positions. The initialization statements may be considered initialization hints. The initialization statements indicate, during runtime, how to calculate the leaf positions. Additionally or alternatively, the initialization statements may indicate one or more external data sources for the leaf positions. The initialization statements may follow all positions statements, but are defined before any contracts.

The semantics are risk analysis profile (RAP) dependent. In an implementation, if the value is a number, the number is treated as a notional limit. If the value is a resource identifier of an asset, the new position takes its value from the asset. If the resource is an exposure, the new position is the result of applying the RAP to the exposure.

An example set of initialization statements may be:

```
     Initially
       PortA <- {assets 1234} // Use the ELT/PLT found at asset 1234
          Book <- {1M} // Treat 1M as a notional limit
          Account456 <- {exposures 456} // Run MEX against Account456 and a given RAP
```

In the above example, ELT refers to an Event Loss Table. An event loss table is the analytic result, expressed as a distribution (for example, mean loss and standard deviation, parametrizing a Beta distribution) of a model run. The table contains an entry for each event in the model(s) run, and for each event, indicates the event identifier, date of loss or damage, mean, and std deviation of the loss associated with the event. An ELT may be produced at any level of resolution: a portfolio of contracts or schedules of exposure, a single contract or schedule, a single location, or any supported level of aggregation in between.

Catastrophe models produce ELTs of damage. The ELT for a catastrophe model may indicate, for example, the real property at 101 Elm St. suffered mean damage of 0.75 with standard deviation 0.3 from Windstorm 231 on July 17, 2018. Ground up loss ELTs (loss to the interest holder in the property) and gross loss ELTs can be calculated from the damage ELT.

In the above example, PLT refers to a Period loss table. Each period, for example 6 years, is an independent trial in a simulation. In an implementation, a period contains events (such as storms, hurricanes, tornadoes) from one or more peril models. In a peril model, a particular event may occur in 0 or more periods, on different dates, and with different sampled severities.

A PLT may be generated from one or more ELTs by splaying the events over a timeline (for example, using a particular distribution assumption such as Poisson or negative binomial) and sampling the event mean loss and STD, producing a discrete loss for the exposure for each occurrence of an event in the time line.

In the above example, MEX refers to Model Execution. A model execution framework may run one or more peril models against exposure and primary contracts and produces Ground up and Gross PLTs.

In some implementations, initialization statements may be specified external to the structure. Additionally or alternately, the initialization statements may be specified at runtime and performed at runtime. Additionally or alternatively, the initialization statements may be stored in one or more files separate from the structure.

### 2.3 CONTRACTS

A contract comprises a set of program instructions that model coverage, terms, and conditions for determining payout following loss events under an agreement. In an implementation, a contract is defined using a contract definition language (CDL). In an implementation, the CDL is incorporated within the structure definition programming language. One example of a contract definition language is described in U.S. Patent Application No. 13/914,774, entitled "Predicting and Managing Impacts from Catastrophic Events," filed on June 11, 2013, and is incorporated herein by reference for all purposes as if fully set forth herein.

In an implementation, a contract specifies two positions: the subject position and the output position. The subject position represents the claims against the contract, and the output position represents the contract's payout. The output position of a contract is identified by the contract name. The subject position of a contract is identified by the contract subject.

An example contract defined using CDL may be:

```
          Contract
              Declarations
                     Name is Market: WX1
                     Subject is Acme:PortfolioA
                     Currency is USD
                     Description is {1M xs 1M}
              Covers
                     100% share of 1000000 xs 10000
```

In the above example, the contract name is "Market:WX1" and the contract subject is "Acme:PortfolioA." The contract indicates that it covers 100% share of 1000000 excess of 10000. That is, the cover states that up to a limit of $1M USD, it will pay the amount in excess of $10K USD from a loss event. That is, on a claim of $1M USD loss, payment would be $990K USD.

In an implementation, the structure definition programming language can incorporate and/or reference contracts, allowing application of structures to computing insurance risks or financial risks as defined by contracts.

In an implementation, rather than defining a contract using CDL, the structure may specify only a contract name and contract subject, using the structure definition programming language. An example contract position defined using the structure definition programming language may be:
Market: WX1 IS CONTRACT ON Acme:PortfolioA

In the above example, Acme:PortfolioA is the subject position of the contract position, and Market:WX1 is the output position. The output position indicates the name of the contract. In an implementation, the contract does not need specify its name or subject in CDL, as they are explicitly specified in the SDL statement. The terms and conditions of the contract may be specified in CDL, and stored in association with the Structure object. Additionally or alternately, the CDL may be included in the Structure itself.

Referring to the contract example described above, the name and subject of the contract would not be defined in the contract text. The modified CDL, without the name and subject, may be:

```
          Contract
              Declarations
                     Currency is USD
                     Description is {1M xs 1M}
              Covers
                     100% share of 100000 xs 10000
```

### 2.4 PORTFOLIOS

Portfolios are collections of positions. In an implementation, the positions in a portfolio may include contracts, for example primary insurance contracts, defined in CDL. The collection of positions in a portfolio may not be explicitly described using structure definition programming language, since each portfolio can contain millions of positions.

Due to the size of a portfolio, calculations related to analyzing the portfolio may be performed by a separate application and/or pre-calculated. Portfolio positions may be the leaf nodes of the composed structures described above. That is, a portfolio position may be defined without referencing another position, contract, or portfolio. A portfolio position can represent the (expensive) result of a physical modeling exercise, such as catastrophe modeling. The portfolio value may be calculated, modeled, or retrieved at runtime using initialization hints.

### 3.0 STRUCTURE COMPILATION AND EXECUTION

In order to use structures for answering queries, the structures may be compiled into executable form. As discussed in further detail below, a compiled structure comprises the structure itself and all external references combined together in a compiled data structure. The compiled data structure facilitates efficient analysis of a set of positions of interest, e.g., for reporting purposes. Indeed, the compiled data structure, by resolving all external references, enables pre-retrieval of relationships between different data objects, grouping them seamlessly for analysis by a simple query. Changes to a data object can also be propagated to other related objects.

In an implementation, to compile a structure, a list of input positions is received. The input positions may be qualified by their structure name to identify the corresponding structure. Alternately, positions may be uniquely named across structures, and the corresponding structure may be determined by searching for the position name within a set of structures.

The input positions determine the starting point from which a compiled structure is generated. For each input position, the corresponding structure is retrieved and read. The system recursively resolves all position names (described in position and contracts portion of the structure) in the corresponding structure. If a reference to an external position is encountered, the other structure is retrieved and added to the current structure. The process is repeated for each additional external reference, until all references are resolved or until certain stop criteria are met in order to obtain the compiled structure. Example stop criteria may include a depth of search (i.e. how long a chain of references can get), insufficient permission to read an external structure, a specified stop position, etc. In an implementation, when compiling the structures, all position names are fully-qualified based their original structure name. For example, Net in Structure S1 may become S1!Net.

The resulting combined structure is parsed and compiled into a form suitable for execution. Unlike a structure resource, this form is not typically suitable for visualization. For one thing, the executable form may have thousands or millions of nodes (e.g. positions or contracts).

In an implementation, the compiled structures may be generated in advance, and stored for retrieval and execution during query processing. Additionally or alternatively, the compiled structure may not be generated until a query is received. The query may indicate one or more positions and the compiled structure may be generated using the one or more indicated positions as the input positions. The generated compiled structure may be stored for reuse by subsequent queries.

In an implementation, a position graph is generated based on the combined structures. A position graph (also referred to herein as a PGraph) is a compiled structure which contains the transitive closure of all positions and contracts, dependent on one or more start positions. The one or more start positions may correspond to the one or more input positions. In an implementation, the PGraph is built by reading the start positions, and then recursively following the position statements which define them, until all statements are either defined or are leaves.

In an implementation, a PGraph comprises a directed acyclic graph (DAG) containing all positions and contracts needed to compute quantities for the positions of interest. In an implementation, the PGraph may include a JavaScript function that is a self-contained contract loss engine for one or more of these contracts. The loss engine computes a loss (or other quantity) for the one or more contracts. In another implementation, the system compiles the CDL into an intermediate representation (IR) which is interpreted by a fast, simple calculator.

Other targets for computing values for a contract may be available. For example, a random value may be generated based on one or more parameters, data may be received or requested from a modelling program, application, or function that models the one or more contracts.

In an implementation, a language-specific parser and compiler may be configured to generate machine-executable code, or pseudocode for interpretation, based on performing parsing of one or more structures, tokenize the structures, and generate executable instructions based on the steps discussed above. The parser and compiler may be configured to parse and tokenize structures defined using a structure definition language and generate a PGraph corresponding to a combined structure.

In an implementation, an execution engine may be configured to interpret a compiled structure, e.g. PGraph, and execute the compiled structure. The execution engine may be configured to traverse the nodes represented in the PGraph and evaluate the nodes to generate results. In an implementation, executing a PGraph comprises, for each position of one or more positions, specified by the query, determining a value corresponding to the position. Determining the value may comprise recursively traversing the PGraph to determine values for input positions of the position, input positions of those input positions, and so on, until leaf nodes are reached. Alternately, the compiler may generate a set of executable instructions based on the PGraph which, when executed, perform the graph traversal steps described above.

In an implementation, initialization hints are used by the execution engine to initialize any positions that are not resolved by the above process. If a hint exists for a position, it is ignored if the position can be resolved using the above method.

As an example, assume the system stores two structures, structure A and structure B, described below.

```
           Structure // Structure A
              Net is B! Gross - Ceded
          Initially
              B!Gross <- {assets 123}
           Structure // Structure B
              Gross is PortA + PortB
           Initially
              PortA <- {portfolios 456}
              PortB <- {portfolios 789}
```

Assume a request to retrieve the PGraph for A!Net is received. The system would generate and compile the structure for A!Net. In the illustrated example, Structure A would be retrieved. The position Net is formed by subtracting the position Ceded from the position B!Gross (the Gross position from Structure B). In an implementation, since Structure B is defined, the initialization hint for B! Gross indicated in Structure A would not be used.

The following (anonymous) structure illustrates an example structure generated by the request:

```
           Structure
              A!Net is B!Gross - A!Ceded
              B!Gross is B!PortA + B!PortB
          Initially
              B!PortA <- {portfolios 456}
              B!PortB <- {portfolios 789}
```

A large composed (or rollup) structure may comprise of thousands of other structures. Each of the other structures may contain dozens of positions and contracts, and have thousands of leaf positions. Each leaf position may each represent thousands to millions of primary contracts.

In an implementation, the leaf positions may be evaluated (either on demand or in a batch mode) in parallel on a large distributed computing system. Additionally, the results of the evaluation may be cached, so that subsequent requests for the leaf position data do not require re-evaluating the leaf positions. Additionally, the results from evaluating a structure, or a portion of a structure, may be cached so that future requests that reference the structure, or portion thereof, do not require re-evaluating the structure.

### 5.0 PROCESS OVERVIEW

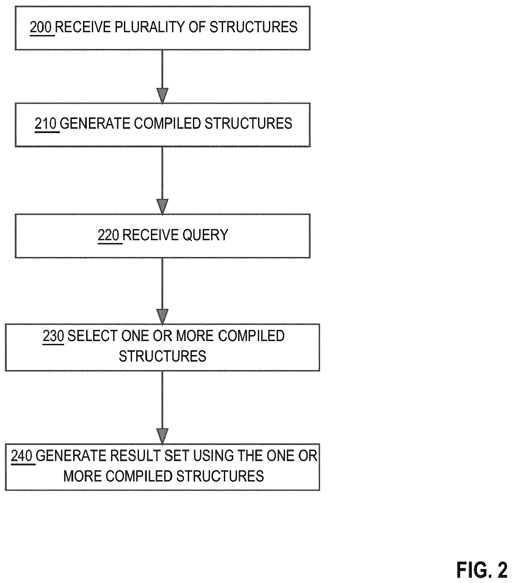

FIG. 2 illustrates an example process for generating a result set for a query using structures. Although the steps in FIG. 2 are shown in an order, the steps of FIG. 2 may be performed in any order, and are not limited to the order shown in FIG. 2. Additionally, some steps may be optional, may be performed multiple times, and/or may be performed by different components. All steps, operations, and functions of a flow diagram that are described herein are intended to indicate operations that are performed using programming in a special-purpose computer or general-purpose computer, in various implementations, at the same level of detail that is used by persons of ordinary skill in the art to which the disclosure pertains for communicating with one another about similar computer programs or algorithms. In other words, each flow diagram in this disclosure is a guide, plan or specification of an algorithm for programming a computer to execute the functions that are described.

At step 200, a plurality of structures is received. The structures may be received, for example, as files or other text documents, from user input, or from a web request through a client application or browser. In an implementation, each structure of the plurality of structures specifies one or more position statements that define a position. Each structure may be a program written using the structure definition programming language. In an implementation, the plurality of structures is stored by the computer system.

At step 210, one or more compiled structures are generated based on the plurality of structures. A language-specific parser and compiler may be used to generate machine-executable code, or pseudocode for interpretation, based on performing parsing of the structure, tokenization and code generation. In an implementation, to compile a structure, a list of input positions is received. The input positions determine the starting point from which a compiled structure is generated. For each input position, the corresponding structure is retrieved and read. The system recursively resolves all position names (described in position and contracts portion of the structure) in the corresponding structure. If a reference to an external position is encountered, the other structure is retrieved and added to the current structure. The compiled structure is consequently the result of the process being repeated for each additional external reference, until all references are resolved or until certain stop criteria are met.

At step 220, a query is received. The query may specify one or more particular positions corresponding to one or more particular structures. The query may qualify the one or more particular positions using the structure name or identify the structure name corresponding to each particular position. In an implementation, the query is specified using SQL or a SQL-like query language. The query is interpreted to obtain information sufficient to permit selecting a particular compiled structure or PGraph.

As an example, assume the plurality of structures form a graph, or a graph-like data structure, where each position is a node of the graph and edges between the graph are relationships between the positions. In an implementation, the graphic is a directed acyclic graph. The fact that the graph has no cycles allows the flow of quantities up the graph without encountering infinite loops. The fact that a position may have multiple parents allows the expression and computation of multiple flows dependent on a node. An example of multiple flows maybe:
Net is Gross - Ceded
GrossExpense is Gross * 0.15

In the above example, the Gross position has two parent positions, Net and GrossExpense.

An analytic question can be asked of any position in the overall graph. For example, an analytic question may be "What is the average annual loss and tail conditional expectation of CompanyGroup's Net position?" An example query corresponding to the question may be:
SELECT AAL, TCE from CompanyGroup!Net

At step 230, one or more particular compiled structures are selected based on the received query. The one or more particular compiled structures may be selected based on the particular positions specified in the query. Referring to the above example, a compiled structure that includes instructions that evaluate CompanyGroup!Net is selected. Selecting the particular compiled structure may comprise searching a set of compiled structures for particular positions, or searching metadata associated with the set of compiled structures, to determine which compiled structures are associated with the specified positions. Additionally or alternatively, the one or more particular compiled structures may be generated in response to receiving the query, based on the one or more particular positions specified by the query.

At step 240, the particular PGraph is executed. In an implementation, executing the PGraph comprises, for each position of the one or more particular positions, determining a value for the position. Determining a value may comprise recursively traversing the PGraph to determine values for input positions of the position, input positions of those input positions, and so on, until leaf nodes are reached.

Additionally, each leaf node position may be evaluated based on initialization hints and/or one or more configurations. For example, the leaf node position may be evaluated by retrieving an associated loss table and determining a particular value stored in the loss table. As another example, a particular value or range of values may be specified by a user or in a configuration. If a range of values is specified, a random value may be generated that is within the specified range.

Alternately, the leaf node position may be evaluated by retrieving or requesting data from another application, function, module, or data storage device. The provided data may be the result of calculating a model, executing a simulation, or performing other analysis to generate a value for the position. Additionally, one or more initialization hints may be provided to the external application for use in generating the value.

A set of query results is generated based on the evaluations. Generating the results may include merging, filtering, or otherwise manipulating the output generated by the evaluations, based on the contents of the query. Referring to the above example, after CompanyGroup!Net is evaluated, average annual loss and tail conditional expectation may be computed based on CompanyGroup!Net. The set of results may be stored, sent to a requesting client computer or application, or displayed in a user interface.

### 6.0 EXAMPLES

In an implementation, server computer 110 provides a user interface for a user to access structures stored in data storage system 130. The user interface may be a graphical user interface that displays a visualization of the structures. Additionally, the user interface may be used to view, edit, manage, search/query for particular structures. In some implementations, the user interface may also be used to receive queries and display a result set generated in response to the query.

The user interface may be implemented as an application executing on the computer system and displayed on a display device connected to the computer system. Alternatively, the user interface may be implemented by other mechanisms, such as a web page rendered by a browser on a client computing device. The user interface may be implemented using an API for the structure management system.

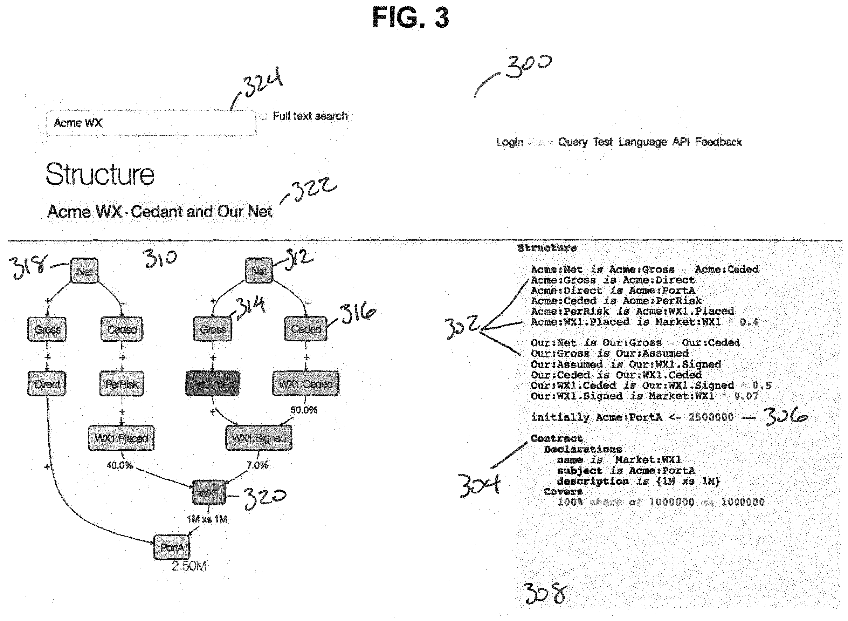

FIG. 3, FIG. 4, FIG. 5, FIG. 6, FIG. 7 depict example graphical user interfaces (GUIs) that may be generated by server computer 110 in the form of instructions that are transmitted to client computing device 120 for rendering and display.

Referring first to FIG. 3, it illustrates an example graphical user interface 300 displaying a structure. In the illustrated example, the text of the structure is displayed in a first display region 308 on the right of the GUI 300, and a graphical representation of the structure is displayed in a second display region 310 on the left of the GUI 300. As shown in the text, the structure includes a plurality of position statements 302 that define a plurality of positions, e.g., Acme:Net, Acme:Gross, Our:Net, etc. The illustrated structure also includes a contract 304, WX1, which is defined using contract definition language. In addition, the structure includes an initialization statement 306 which initializes the value of the position Acme:PortA to 2500000.

The graphical representation is displayed in the form of a directed graph comprising a plurality of nodes, such as nodes 312-320, interconnected by a plurality of edges. The nodes correspond to positions and contracts specified in the structure, and the edges of the graph indicate the relationships between the positions. For example, the structure specifies that "Acme:Net is Acme:Gross - Acme:Ceded." In the graphical representation, Net is a parent node, e.g. 312, with directed edges towards two nodes 314 and 126, Gross and Ceded. The edges indicate a plus symbol for Gross and a minus symbol for Ceded, corresponding to the operators associated with each position in the position statement. In the illustrated implementation, the edges from node 312 to 314 and 316 include downward pointing arrows. The arrows pointing down illustrate that the parent depends on its children. In other implementations, the arrows may be displayed pointing to the parents, to indicate the flow of loss and other quantities upwards.

In the illustrated implementation, each namespace may be represented using a different color. For example, the structure includes the namespaces "Acme" and "Our." In the graphical representation, nodes corresponding to positions in the "Acme" namespace may be depicted in a first color (e.g. blue), while nodes corresponding to positions in the "Our" namespace may be depicted in a second color (e.g. orange). In the illustrated example, the contract WX1 may be depicted in a third color (e.g. green) in the graphical representation.

Additionally, the name of the structure 322 is displayed above the structure text and the graphical representation. In the illustrated implementation, the structure name 322 is not included in the text of the structure. The structure name may also be edited. For example, selecting the name may cause a text field to be displayed for modifying the structure name. Additionally, editing the structure name may generate a new structure that is a copy of the current structure.

In an implementation, the structure may be edited using the graphical user interface 300. The graphical representation may be updated as the structure is edited to reflect changes to the structure.

In FIG. 3, the user interface 300 includes a search box 324 for searching structures. Typing in the search box may retrieve a list of structures whose structure name corresponds to the search query. Additionally or alternatively, a list of structures whose text includes the search query may be retrieved.

A plurality of structures may each be inter-related to one another. For example, assume a set of structures represent reinsurance programs for a company. Each reinsurance program contain one or more treaties. The reinsurance programs may all roll up to a corporate gross position. Losses (or gains) may also be computed for individual structures.

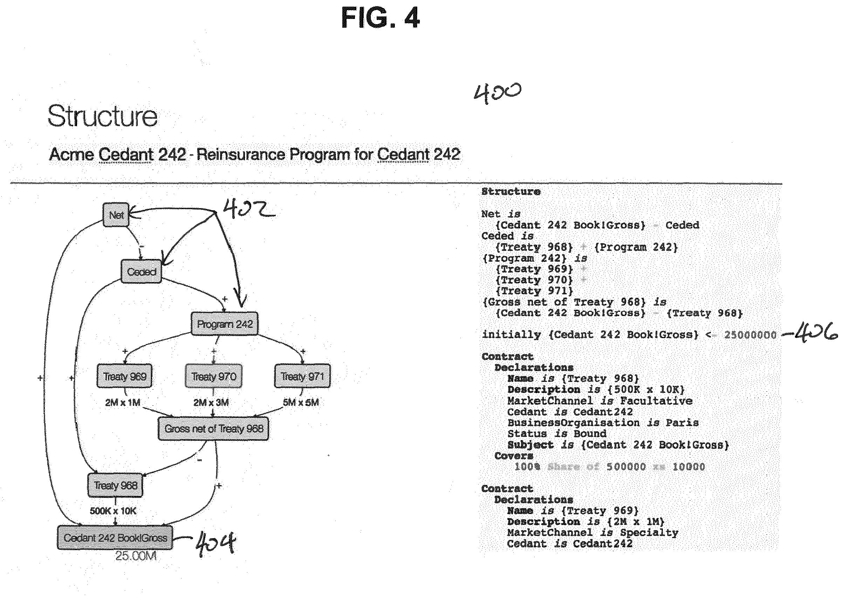

FIG. 4 illustrates an example graphical user interface 400 displaying an example reinsurance program, "Acme Cedant 242- Reinsurance Program for Cedant 242." In the illustrated example, values are calculated for each position 402based on the values of each input position. The leaf node position 404, "Cedant 242 Book!Gross," is set to a value of 25000000 using an initialization statement. In other implementations, the value may be retrieved from another structure or from another data source. The value may also be generated programmatically. For example, the value may be a randomly or pseudo-randomly generated value between 0 and a specified maximum value.

The value of Book!Gross is used to calculate the values of the positions for which it is an input position, i.e., Gross Net of Treaty 968 and Cedant 242 Net. The value of each of those positions are used to calculate the values of the positions for which they are an input position, and so on until values have been calculated for the entire structure.

Additionally, or alternatively, losses and gains may be rolled up, and metrics may be computed (based on a SQL-like query language, RQL) against any position in the roll up.

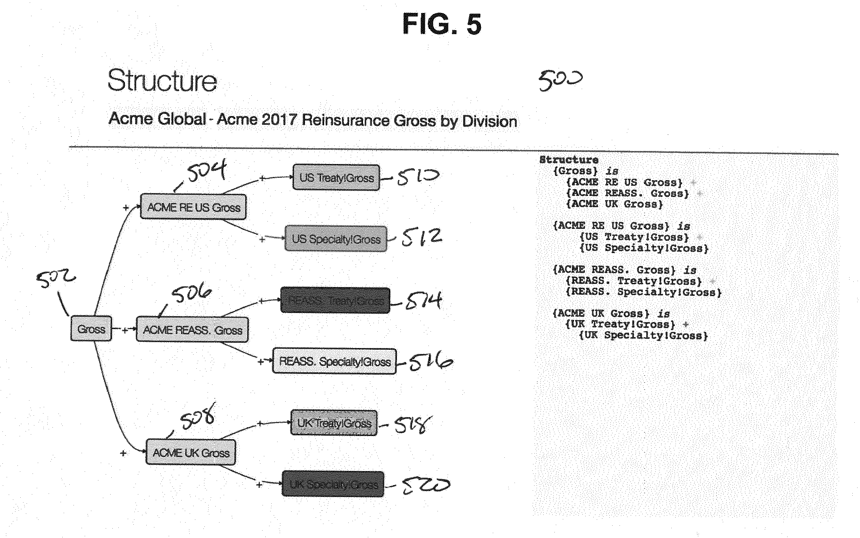

FIG. 5 illustrates an example user interface 500 displaying the top of an example rollup structure, "Acme Global." In the illustrated example, the Gross position 502 of the structure is formed by adding three positions: position 504 {ACME RE US Gross}, position 506 {ACME REASS. Gross}, and position 508 {ACME UK Gross}. The position 504 {ACME RE US Gross} is formed by adding position 510 {US Treaty!Gross}, which is the Gross position of the structure "US Treaty," and position 512 {US Specialty!Gross}, which is the Gross position of the structure "US Specialty." Each structure, "US Treaty" and "US Specialty," are separately defined elsewhere. Similarly, in FIG. 5, the position 506 {ACME REASS. Gross} is formed by combining the position 514 {REASS. Treaty!Gross} and position 516 {REASS. Specialty! Gross}, and position 508 {ACME UK Gross} is formed by adding position 518 {UK Treaty!Gross} and position 520 {UK Specialty!Gross}.

In order to compute the position 504, {ACME RE US Gross}, the Gross position of "US Specialty" and "US Treaty" must each be calculated. The structures "US Specialty" and "US Treaty" may be created or modified separately from the current structure, "ACME Global." In addition, modifying the other structures does not require making any changes to "ACME Global." Similarly, changes to how the positions in "ACME Global" are defined can be easily made without modifying any of the input positions.

In the illustrated example, because each leaf node references a separate structure (e.g., US Treaty, REASS. Treaty), each node is depicted using a different color.

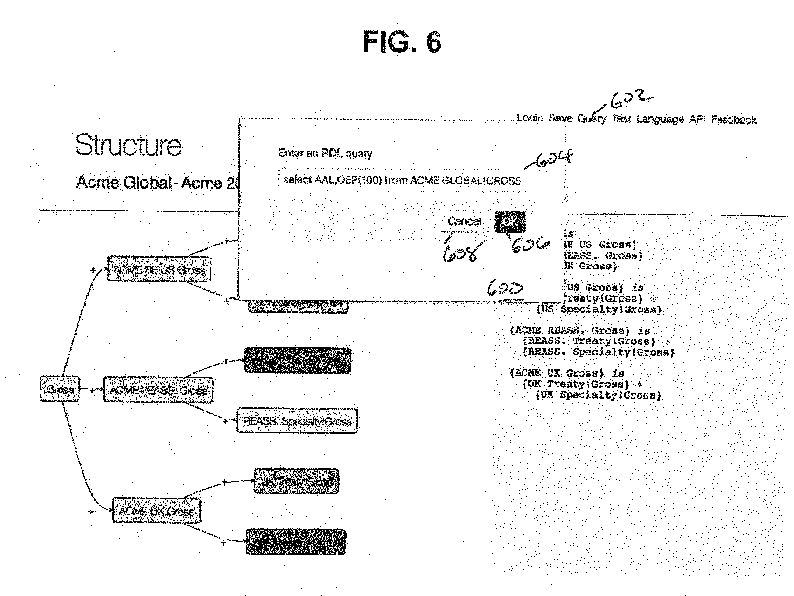

FIG. 6 depicts an example graphical user interface for entering a query. In the illustrated example, a dialog box 600 is displayed for entering a query. The dialog box 600 may be displayed in response to selecting a query option, such as the "Query" menu element 602. The dialog box 600 comprises a text field 604 for entering a query, a graphical "OK" button 606, and a graphical "Cancel" button 608. Selecting "OK" button 606 or some other confirmation interface element may cause an inputted query to be sent to the computer system, and the computer system to process the query and return a result set.

In FIG. 6, the query "select AAL, OEP(250) from ACME Global!Gross" is entered in text field 604. The example query computes the metrics "average annual loss" and "250 year occurrence exceedance probability" for the Gross position of the structure ACME Global. In an implementation, for rollups, the PLT for each position in the PGraph is recursively computed using the SDL algebra. When the leaf positions are reached, the system computes (runs models) or lookup cached/uploaded values for the PLTs for each of these positions. PLTs are used, in part, because most of the useful metrics (AAL, AEP, OEP, TCE ...) are easily computed from the PLT.

In the present example, the query is a Risk Query Language (RQL) query. In other implementations, the query may be any query language, such as SQL.

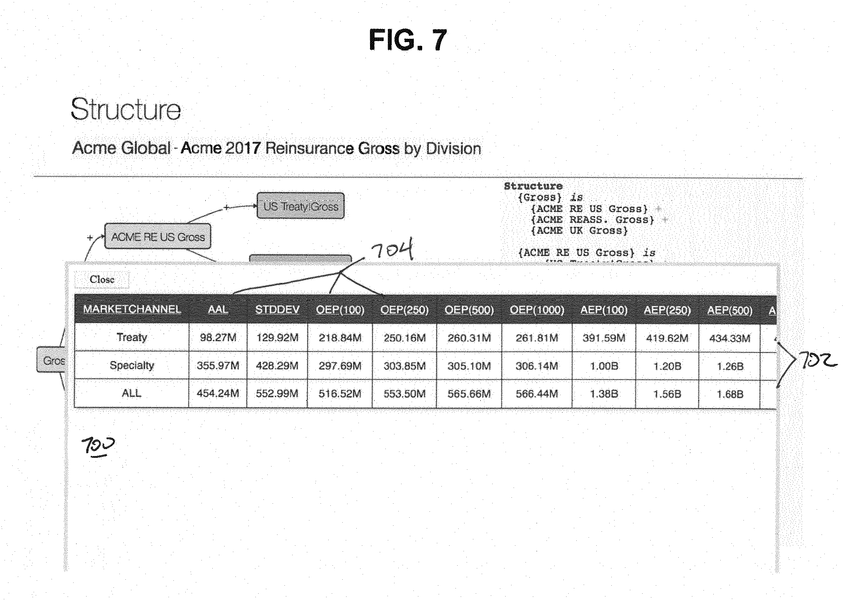

FIG. 7 depicts an example query result set displayed in a graphical user interface. For the purpose of illustrating a clear example, assume the query "SELECT * FROM Acme Global!Gross GROUPBY MarketChannel" was received. In the illustrated example, a dialog box 700 is displayed for providing a set of query results. The dialog box 700 may be displayed in response to receiving a result set from the system, or may be generated by the system. The query results are displayed in a table format. In FIG. 7, rows 702 each correspond to a particular market channel (e.g. Treaty, Specialty, All), and the columns 704 each indicate a particular quantity (e.g., AAL, STDDEV, OEP(100)) corresponding to each market channel.

MarketChannel, BusinessOrganisation, and such, are declarations defined in the treaties - the grouping could be based on segmentation available at the leaves, or on attributes of the treaties, or both.

These queries illustrate the ability to set up a corporate view of (in this case, catastrophe) risk, and then ask a question against any position/positions. Based on modeling assumptions (which control the execution of the underlying cat models on the leaf portfolios), the entire massive computation, which can involve a simulation of millions of events across a 10K or more reinsurance programs covering hundreds of millions of risks, can be set off by asking a single question/query such as: SELECT AAL, AEP(250) from corp!gross, corp!net, corp!profit group by channel, LineOfBusiness.

### 7.0 IMPLEMENTATION EXAMPLE-COMPUTER HARDWARE OVERVIEW

According to one implementation, the techniques described herein are implemented by at least one computing device. The techniques may be implemented in whole or in part using a combination of at least one server computer and/or other computing devices that are coupled using a network, such as a packet data network. The computing devices may be hard-wired to perform the techniques, or may include digital electronic devices such as at least one application-specific integrated circuit (ASIC) or field programmable gate array (FPGA) that is persistently programmed to perform the techniques, or may include at least one general purpose hardware processor programmed to perform the techniques pursuant to program instructions in firmware, memory, other storage, or a combination. Such computing devices may also combine custom hard-wired logic, ASICs, or FPGAs with custom programming to accomplish the described techniques. The computing devices may be server computers, workstations, personal computers, portable computer systems, handheld devices, mobile computing devices, wearable devices, body mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

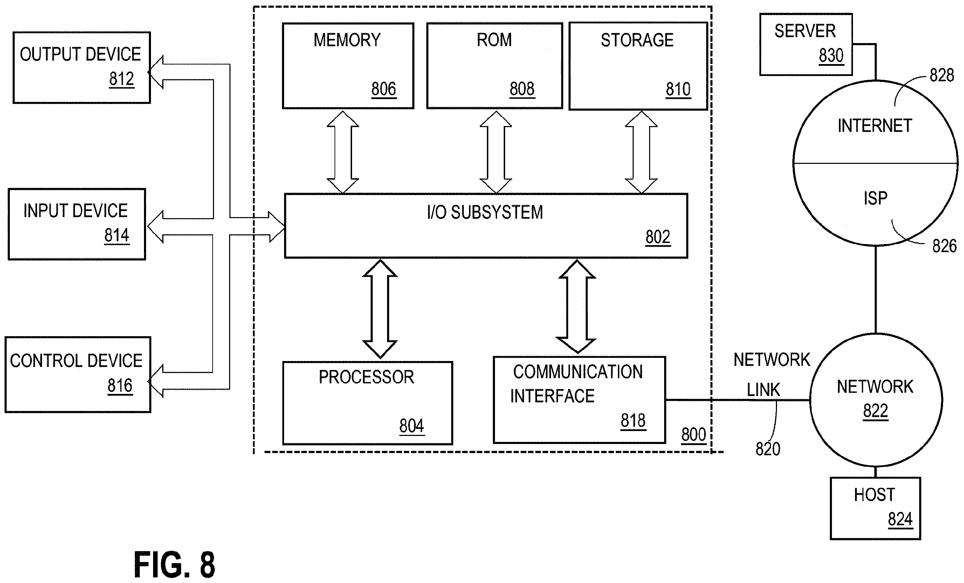

FIG. 8 is a block diagram that illustrates an example computer system with which an implementation may be implemented. In the example of FIG. 8, a computer system 800 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

Computer system 800 includes an input/output (I/O) subsystem 802 which may include a bus and/or other communication mechanism(s) for communicating information and/or instructions between the components of the computer system 800 over electronic signal paths. The I/O subsystem 802 may include an I/O controller, a memory controller and at least one I/O port. The electronic signal paths are represented schematically in the drawings, for example as lines, unidirectional arrows, or bidirectional arrows.

At least one hardware processor 804 is coupled to I/O subsystem 802 for processing information and instructions. Hardware processor 804 may include, for example, a general-purpose microprocessor or microcontroller and/or a special-purpose microprocessor such as an embedded system or a graphics processing unit (GPU) or a digital signal processor or ARM processor. Processor 804 may comprise an integrated arithmetic logic unit (ALU) or may be coupled to a separate ALU.

Computer system 800 includes one or more units of memory 806, such as a main memory, which is coupled to I/O subsystem 802 for electronically digitally storing data and instructions to be executed by processor 804. Memory 806 may include volatile memory such as various forms of random-access memory (RAM) or other dynamic storage device. Memory 806 also may be used for storing temporary variables or other intermediate information during execution of instructions to be executed by processor 804. Such instructions, when stored in non-transitory computer-readable storage media accessible to processor 804, can render computer system 800 into a special-purpose machine that is customized to perform the operations specified in the instructions.

Computer system 800 further includes non-volatile memory such as read only memory (ROM) 808 or other static storage device coupled to I/O subsystem 802 for storing information and instructions for processor 804. The ROM 808 may include various forms of programmable ROM (PROM) such as erasable PROM (EPROM) or electrically erasable PROM (EEPROM). A unit of persistent storage 810 may include various forms of non-volatile RAM (NVRAM), such as FLASH memory, or solid-state storage, magnetic disk or optical disk such as CD-ROM or DVD-ROM, and may be coupled to I/O subsystem 802 for storing information and instructions. Storage 810 is an example of a non-transitory computer-readable medium that may be used to store instructions and data which when executed by the processor 804 cause performing computer-implemented methods to execute the techniques herein.

The instructions in memory 806, ROM 808 or storage 810 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or no SQL, an object store, a graph database, a flat file system or other data storage.

Computer system 800 may be coupled via I/O subsystem 802 to at least one output device 812. In one implementation, output device 812 is a digital computer display. Examples of a display that may be used in various implementations include a touch screen display or a light-emitting diode (LED) display or a liquid crystal display (LCD) or an e-paper display. Computer system 800 may include other type(s) of output devices 812, alternatively or in addition to a display device. Examples of other output devices 812 include printers, ticket printers, plotters, projectors, sound cards or video cards, speakers, buzzers or piezoelectric devices or other audible devices, lamps or LED or LCD indicators, haptic devices, actuators or servos.

At least one input device 814 is coupled to I/O subsystem 802 for communicating signals, data, command selections or gestures to processor 804. Examples of input devices 814 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 816, which may perform cursor control or other automated control functions such as navigation in a graphical interface on a display screen, alternatively or in addition to input functions. Control device 816 may be a touchpad, a mouse, a trackball, or cursor direction keys for communicating direction information and command selections to processor 804 and for controlling cursor movement on display 812. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 814 may include a combination of multiple different input devices, such as a video camera and a depth sensor.

In another implementation, computer system 800 may comprise an internet of things (IoT) device in which one or more of the output device 812, input device 814, and control device 816 are omitted. Or, in such an implementation, the input device 814 may comprise one or more cameras, motion detectors, thermometers, microphones, seismic detectors, other sensors or detectors, measurement devices or encoders and the output device 812 may comprise a special-purpose display such as a single-line LED or LCD display, one or more indicators, a display panel, a meter, a valve, a solenoid, an actuator or a servo.

When computer system 800 is a mobile computing device, input device 814 may comprise a global positioning system (GPS) receiver coupled to a GPS module that is capable of triangulating to a plurality of GPS satellites, determining and generating geo-location or position data such as latitude-longitude values for a geophysical location of the computer system 800. Output device 812 may include hardware, software, firmware and interfaces for generating position reporting packets, notifications, pulse or heartbeat signals, or other recurring data transmissions that specify a position of the computer system 800, alone or in combination with other application-specific data, directed toward host 824 or server 830.

Computer system 800 may implement the techniques described herein using customized hard-wired logic, at least one ASIC or FPGA, firmware and/or program instructions or logic which when loaded and used or executed in combination with the computer system causes or programs the computer system to operate as a special-purpose machine. According to one implementation, the techniques herein are performed by computer system 800 in response to processor 804 executing at least one sequence of at least one instruction contained in main memory 806. Such instructions may be read into main memory 806 from another storage medium, such as storage 810. Execution of the sequences of instructions contained in main memory 806 causes processor 804 to perform the process steps described herein. In alternative implementations, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage 810. Volatile media includes dynamic memory, such as memory 806. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 802. Transmission media can also take the form of acoustic or light waves, such as those generated during radio-wave and infra-red data communications.

Various forms of media may be involved in carrying at least one sequence of at least one instruction to processor 804 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 800 can receive the data on the communication link and convert the data to a format that can be read by computer system 800. For instance, a receiver such as a radio frequency antenna or an infrared detector can receive the data carried in a wireless or optical signal and appropriate circuitry can provide the data to I/O subsystem 802 such as place the data on a bus. I/O subsystem 802 carries the data to memory 806, from which processor 804 retrieves and executes the instructions. The instructions received by memory 806 may optionally be stored on storage 810 either before or after execution by processor 804.

Computer system 800 also includes a communication interface 818 coupled to bus 802. Communication interface 818 provides a two-way data communication coupling to network link(s) 820 that are directly or indirectly connected to at least one communication networks, such as a network 822 or a public or private cloud on the Internet. For example, communication interface 818 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 822 broadly represents a local area network (LAN), wide-area network (WAN), campus network, internetwork or any combination thereof. Communication interface 818 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 818 sends and receives electrical, electromagnetic or optical signals over signal paths that carry digital data streams representing various types of information.

Network link 820 typically provides electrical, electromagnetic, or optical data communication directly or through at least one network to other data devices, using, for example, satellite, cellular, Wi-Fi, or BLUETOOTH technology. For example, network link 820 may provide a connection through a network 822 to a host computer 824.

Furthermore, network link 820 may provide a connection through network 822 or to other computing devices via internetworking devices and/or computers that are operated by an Internet Service Provider (ISP) 826. ISP 826 provides data communication services through a world-wide packet data communication network represented as internet 828. A server computer 830 may be coupled to internet 828. Server 830 broadly represents any computer, data center, virtual machine or virtual computing instance with or without a hypervisor, or computer executing a containerized program system such as DOCKER or KUBERNETES. Server 830 may represent an electronic digital service that is implemented using more than one computer or instance and that is accessed and used by transmitting web services requests, uniform resource locator (URL) strings with parameters in HTTP payloads, API calls, app services calls, or other service calls. Computer system 800 and server 830 may form elements of a distributed computing system that includes other computers, a processing cluster, server farm or other organization of computers that cooperate to perform tasks or execute applications or services. Server 830 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. Server 830 may comprise a web application server that hosts a presentation layer, application layer and data storage layer such as a relational database system using structured query language (SQL) or no SQL, an object store, a graph database, a flat file system or other data storage.

Computer system 800 can send messages and receive data and instructions, including program code, through the network(s), network link 820 and communication interface 818. In the Internet example, a server 830 might transmit a requested code for an application program through Internet 828, ISP 826, local network 822 and communication interface 818. The received code may be executed by processor 804 as it is received, and/or stored in storage 810, or other non-volatile storage for later execution.

The execution of instructions as described in this section may implement a process in the form of an instance of a computer program that is being executed, and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 804. While each processor 804 or core of the processor executes a single task at a time, computer system 800 may be programmed to implement multitasking to allow each processor to switch between tasks that are being executed without having to wait for each task to finish. In an implementation, switches may be performed when tasks perform input/output operations, when a task indicates that it can be switched, or on hardware interrupts. Time-sharing may be implemented to allow fast response for interactive user applications by rapidly performing context switches to provide the appearance of concurrent execution of multiple processes simultaneously. In an implementation, for security and reliability, an operating system may prevent direct communication between independent processes, providing strictly mediated and controlled inter-process communication functionality.

In the foregoing specification, implementations of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

## Claims

1. A computer implemented method for evaluating one or more quantities stored in a data storage system (130), a quantity being represented by a position, the method comprising:
storing a plurality of structures, wherein the plurality of structures defines a plurality of positions and a plurality of relationships between the plurality of positions;
generating one or more compiled structures based on the plurality of structures;
receiving, from a client computing device (120), a query specifying one or more input positions;
in response to receiving the query:
selecting, based on the one or more input positions, one or more particular compiled structures of the one or more compiled structures;
determining a result set for the query based on executing the one or more particular compiled structures, wherein executing the one or more particular compiled structures causes evaluating at least the one or more input positions;
causing the result set to be provided to the client computing device;
wherein the method is performed by one or more computing devices (110).

2. The method of Claim 1 wherein generating the one or more compiled structures is performed in response to receiving the query, wherein generating the one or more compiled structures is further based on the one or more input positions.

3. The method of Claim 1 wherein generating a particular compiled structure of the one or more compiled structures comprises:
receiving one or more start positions;
determining one or more structures associated with the one or more start positions;
combining the one or more structures to generate a combined structure;
generating the particular compiled structure based on the combined structure.

4. The method of Claim 3 wherein generating the particular compiled structure further comprises:
determining one or more additional structures referenced by positions defined in the combined structure, wherein the one or more additional structures are not included in the combined structure;
including the one or more additional structures in the combined structure;
repeating the determining and including until no additional structures are referenced by positions defined in the combined structure or until one or more stop criteria have been satisfied.

5. The method of one of the previous Claims 1 to 4, wherein each compiled structure of the one or more compiled structure is a directed acyclic graph comprising a plurality of nodes and a plurality of edges, wherein each node of the plurality of nodes corresponds to a particular position of the plurality of positions, and wherein each edge of the plurality of edges corresponds to a particular relationship of the plurality of relationships.

6. The method of Claim 5 wherein executing the one or more particular compiled structures comprises:
determining one or more nodes corresponding to the one or more input positions;
for each node of the one or more nodes:
from the node, traversing one or more edges of the plurality of edges to visit one or more additional nodes, until one or more leaf nodes are reached;
after reaching the one or more leaf nodes, evaluating the one or more leaf nodes;
evaluating the one or more additional nodes based on evaluating the one or more leaf nodes;
evaluating the one or more nodes based on evaluating the one or more additional nodes and the one or more leaf nodes.

7. The method of Claim 6 wherein one or more of: evaluating the one or more leaf nodes, evaluating the one or more additional nodes, or evaluating the one or more nodes, is performed in parallel.

8. The method of one of the previous Claims 1 to 7, wherein a particular position is defined based on an external data source, and wherein executing the one or more particular compiled structures causes evaluating the particular position by retrieving data from the external data source.

9. The method of one of the previous Claims 1 to 8, wherein a particular position is defined based on a contract, and wherein executing the one or more particular compiled structures causes evaluating the particular position by evaluating the contract.

10. The method of one of the previous Claims 1 to 9, wherein a particular position is defined based on one or more additional positions, wherein executing the one or more particular compiled structures causes evaluating the one or more additional positions, and evaluating the particular position based on evaluating the one or more additional positions.

11. A server computing system (100) comprising:
a data storage system (130) storing one or more quantities, each quantity being represented by a position;
a client computing device (120) for sending a query specifying one or more input positions;
a computing device (110) comprising one or more processors and non-transitory computer-readable media storing instructions which, when executed by the one or more processors, cause the one or more processors to implement the method of one of the claims 1 to 10 for evaluating one or more quantities stored in a data storage system.

12. A computing device (110) comprising one or more processors and non-transitory computer-readable media storing instructions which, when executed by the one or more processors, cause the one or more processors to implement the method of one of the claims 1 to 10 for evaluating one or more quantities stored in a data storage system.

13. A computer-readable media storing instructions which, when executed by one or more processors, cause the one or more processors to perform the method of one of the claims 1 to 10 for evaluating one or more quantities stored in a data storage system (130).
